# EUROPÄISCHE PATENTSCHRIFT

(11) **EP 1 619 067 B1**
(45) Veröffentlichungstag und Bekanntmachung des Hinweises auf die Patenterteilung: **16.01.2008**
(21) Anmeldenummer: 05015293.3
(22) Anmeldetag: 14.07.2005
(51) Int. Cl.: B60K 31/00

(54) **Verfahren zur Einstellung einer Fahrgeschwindigkeit eines Kraftfahrzeuges und Steuersystem für einen Motor und/oder ein Getriebe eines Kraftfahrzeuges**
Method for adjusting a vehicle speed and control system for engine and/or gearbox of a vehicle
Méthode de régulation de la vitesse d'un véhicule et système de commande pour un moteur et/ou une transmission d'un véhicule

(30) Priorität: 24.07.2004 DE 102004036086
(43) Veröffentlichungstag der Anmeldung: 25.01.2006
(73) Patentinhaber: GM Global Technology Operations, Inc., Detroit, MI 48265-3000 (US)
(72) Erfinder: Pochner, Klaus, Dr., 65428 Rüsselsheim (DE); Schamschula, Stephan, 55296 Harxheim (DE)
(74) Vertreter: Daniel, Ulrich W.P.

(56) Entgegenhaltungen:
- DE-A1- 10 236 224
- DE-A1- 10 255 724
- DE-C1- 10 143 735

## Beschreibung

Die Erfindung betrifft ein Verfahren zur Einstellung einer Fahrgeschwindigkeit eines Kraftfahrzeuges mit einem von einem Motor angetriebenen und regelbaren Getriebe nach dem Oberbegriff des Anspruchs 1. Weiterhin betrifft die Erfindung ein Steuersystem mit einer Steuerschaltung für einen Motor und/oder ein Getriebe eines Kraftfahrzeuges zur Durchführung des Verfahrens.

Ein solches Verfahren ist aus der DE 101 43 735 C bekannt. Bei diesem Verfahren werden zur Bestimmung einer Wunschbeschleunigung Beschleunigungsmuster herangezogen, die zuvor vom Fahrer ausgewählt werden. Dabei wählt der Fahrer ein Fahrprogramm aus. In diesem Fahrprogramm wird abhängig von der Stellung des Fahrpedals eine Wunschbeschleunigung errechnet.

Ein Verfahren zur Einstellung einer Fahrgeschwindigkeit, bei der die Stellung des Fahrpedals in eine Drehmomentanforderung umgesetzt wird, ist aus der WO 00/29244 bekannt. Hierfür wird anhand eines Kennfeldes, bei welchem ein gewünschtes Drehmoment des Motors als Funktion zumindest der Fahrpedalstellung berechnet wird, die zum Erzeugen des Drehmomentes benötigte Luftmenge über eine Drosselklappenstellung eingestellt. Ein Regler der bekannten Steuerschaltung reagiert ständig auf ein Abweichen der Istgeschwindigkeit von der Sollgeschwindigkeit.

Nachteilig bei dem bekannten Verfahren ist, dass der Ausgleich der Differenz zwischen einer Sollgeschwindigkeit und einer Istgeschwindigkeit unabhängig von der Getriebeübersetzung eingestellt wird. Dies hat zur Folge, dass bei Wahl eines kleinen Ganges die Beschleunigung beispielsweise mit einer geringen Last erfolgt. Beim Ausdrehen des Ganges entsteht daraus beim Fahrer der subjektive Eindruck einer sehr geringen Motorleistung.

Man hat bereits daran gedacht, in Verbindung mit einem automatischen Getriebe aus einer Wunschbeschleunigung ein relatives Motormoment zu berechnen und bei Überschreiten einer vorgesehenen Hysterese oberhalb der Volllast des Motors einen Gang herunterzuschalten. In Verbindung mit einer Steuerschaltung zur Einstellung einer Fahrgeschwindigkeit führt diese Hysterese zu einem seltenen Herauf- und Herunterschalten des Getriebes. An einer Steigung führt dies jedoch dazu, dass bei Volllast die gewünschte Geschwindigkeit nicht mehr eingehalten werden kann und eine Wunschbeschleunigung verbleibt. Daher muss auch hier ein Kompromiss zwischen Schalthäufigkeit und Regelgenauigkeit bei der Einstellung der Fahrgeschwindigkeit gefunden werden.

Der Erfindung liegt das Problem zugrunde, ein Verfahren der eingangs genannten Art so weiterzubilden, dass die Einstellung der Fahrgeschwindigkeit besonders komfortabel erfolgt. Weiterhin soll ein möglichst einfaches Steuersystem mit einer Steuerschaltung zur Durchführung des vorgenannten Verfahrens geschaffen werden.

Das erstgenannte Problem wird bei dem gattungsgemäßen Verfahren dadurch gelöst, dass vor dem Abschätzen des zum Erzielen der Wunschbeschleunigung erforderlichen Wertes des zumindest einen Betriebsparameters das Übersetzungsverhältnis des Getriebes erfasst und geändert wird.

Hierdurch lässt sich von dem Fahrer des Kraftfahrzeuges ein Wunschbeschleunigungs-Modus auswählen, nach dem zusammen mit der Fahrpedalstellung die Wunschbeschleunigung berechnet wird. Der Fahrer des Kraftfahrzeuges kann damit durch Auswahl des Wunschbeschleunigungs-Modus vorgeben, welche Wunschbeschleunigung er für notwendig hält, beispielsweise eine ruhige Beschleunigung bis zum Erreichen der vorgesehenen Fahrgeschwindigkeit oder die maximal mögliche Beschleunigung. Daher ist eine Abstimmung der Steuerung der Fahrgeschwindigkeitsregelung nicht mehr als Kompromiss in Form einer einzigen Kennlinie abgespeichert, nach der die Fahrgeschwindigkeit eingestellt wird. Dank der Erfindung kann der Fahrer den Wunschbeschleunigungs-Modus und damit eine vorgesehene Kennlinie zur Berechnung der Wunschbeschleunigung selbst auswählen. Durch diese Auswahl wird das Verhalten der Fahrgeschwindigkeitsregelung eingestellt. Als Betriebsparameter kann beispielsweise die Drosselklappenstellung, eine Einspritzanlage des Motors und/oder ein Übersetzungsverhältnis des Getriebes eingestellt werden. Zur Erhöhung des Komforts der Regelung der Fahrgeschwindigkeit trägt es bei, wenn vor dem Abschätzen des zum Erzielen der Wunschbeschleunigung erforderlichen Wertes des zumindest einen Betriebsparameters das Übersetzungsverhältnis des Getriebes erfasst und geändert wird. In Verbindung mit automatisierten Getrieben lässt sich dank der Erfindung eine dem Wunschbeschleunigungs-Modus entsprechende Getriebeübersetzung einstellen, mit der die gewünschte Geschwindigkeit eingehalten werden kann, wobei an Steigungen bei Bedarf einen Gang heruntergeschaltet werden kann. Erfindungsgemäß lassen sich verschiedene Kompromisse zwischen Schalthäufigkeit und Regelgenauigkeit bei der Auslegung der Fahrgeschwindigkeitsregelung in dem Wunschbeschleunigungs-Modus einstellen.

Nach der Berechnung der Wunschbeschleunigung und der Berechnung eines relativen Motormoments lässt sich eine Hysterese von beispielsweise 10 % oberhalb der Volllast festlegen, oberhalb der heruntergeschaltet wird. Die Größe der Hysterese beim Schalten des Getriebes lässt sich gemäß einer anderen vorteilhaften Weiterbildung der Erfindung einfach verändern, wenn der Maximalwert der Auslastung des Motors von dem Wunschbeschleunigungs-Modus begrenzt und vor dem Abschätzen des zum Erzielen der Wunschbeschleunigung erforderlichen Wertes des zumindest einen Betriebsparameters die Auslastung des Motors erfasst wird. Als Maß für die Auslastung kann hier beispielsweise die Drehzahl herangezogen werden.

Ein Beschleunigungswunsch lässt sich gemäß einer anderen vorteilhaften Weiterbildung der Erfindung von dem Fahrer des Kraftfahrzeuges einfach zumindest kurzzeitig ändern, wenn bei der Erfassung der Fahrpedalstellung die Änderungsrate der Fahrpedalstellung erfasst wird. Ein schnelles Niedertreten des Fahrpedals kann dann als Wunsch nach einer starken Beschleunigung erfasst werden.

Der Wunschbeschleunigungs-Modus lässt sich gemäß einer anderen vorteilhaften Weiterbildung der Erfindung einfach einstellen, wenn der Wunschbeschleunigungs-Modus anhand der Abfolge von Bedienbefehlen der Fahrgeschwindigkeitregelung erfolgt. Übliche Bedienbefehle sind beispielsweise "Resume" für Wiederaufnehmen einer gespeicherten Zielgeschwindigkeit, "Accel" für die gesteuerte Erhöhung der Fahrgeschwindigkeit, solange der Fahrer eine Taste gedrückt hält, "Coast" für ein gesteuertes Verzögern, solange der Fahrer eine Taste gedrückt hält, und "TapUp/TapDown" für eine schrittweise Änderung der Sollgeschwindigkeit pro Tastendruck.

Das zweitgenannte Problem, nämlich die Schaffung eines besonders einfachen Steuersystems mit einer Steuerschaltung zur Durchführung des vorgenannten Verfahrens, wird erfindungsgemäß gelöst durch die Merkmale des Anspruchs 5, insbesondere durch ein manuell betätigbares Bedienelement zur Erfassung eines eingestellten Wunschbeschleunigungs-Modus.

Durch diese Gestaltung lässt sich eine vorgesehene Kennlinie oder ein vorgesehenes Verhalten der Steuerschaltung, nach der die Wunschbeschleunigung berechnet wird, von dem Fahrer des Kraftfahrzeuges einfach auswählen und damit das Verhalten der Fahrgeschwindigkeitsregelung einstellen. Damit hat der Fahrer des Kraftfahrzeuges neben der Betätigung des Fahrpedals zusätzlich durch Betätigen des Bedienelementes die Möglichkeit, die vorgesehene Wunschbeschleunigung einzustellen.

Die Steuerschaltung des Steuersystems erfordert gemäß einer anderen vorteilhaften Weiterbildung der Erfindung einen besonders geringen baulichen Aufwand, wenn das Bedienelement als Wechselschalter ausgebildet ist. Hierdurch lässt sich durch Betätigung des Bedienelementes zwischen voreingestellten Wunschbeschleunigungs-Modi wechseln.

Zur Erhöhung des Komforts bei der Einstellung der Wunschbeschleunigung trägt es gemäß einer anderen vorteilhaften Weiterbildung der Erfindung bei, wenn das Bedienelement als stufenloses Stellelement ausgebildet ist.

Das Getriebe lässt sich gemäß einer anderen vorteilhaften Weiterbildung der Erfindung einfach schalten, wenn die Ausgabeeinheit mit einem Aktor des Getriebes verbunden ist.

Heutige Kraftfahrzeuge weisen häufig Stellelemente zur Ansteuerung beispielsweise einer Federung des Fahrwerks oder einer Lenkhilfe auf. Bei solchen Kraftfahrzeugen lässt sich das Fahrwerk beispielsweise in Abhängigkeit von dem eingestellten Beschleunigungswunsch-Modus straffer oder weicher einstellen oder die Lenkhilfe variieren, wenn die Ausgabeeinheit mit Stellelementen des Fahrwerks und/oder der Lenkung verbunden ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: schematisch ein Kraftfahrzeug mit einer Steuerschaltung zur Durchführung des erfindungsgemäßen Verfahrens,
- Fig. 2: ein Flussdiagramm des erfindungsgemäßen Verfahrens der Steuerschaltung aus Figur 1.

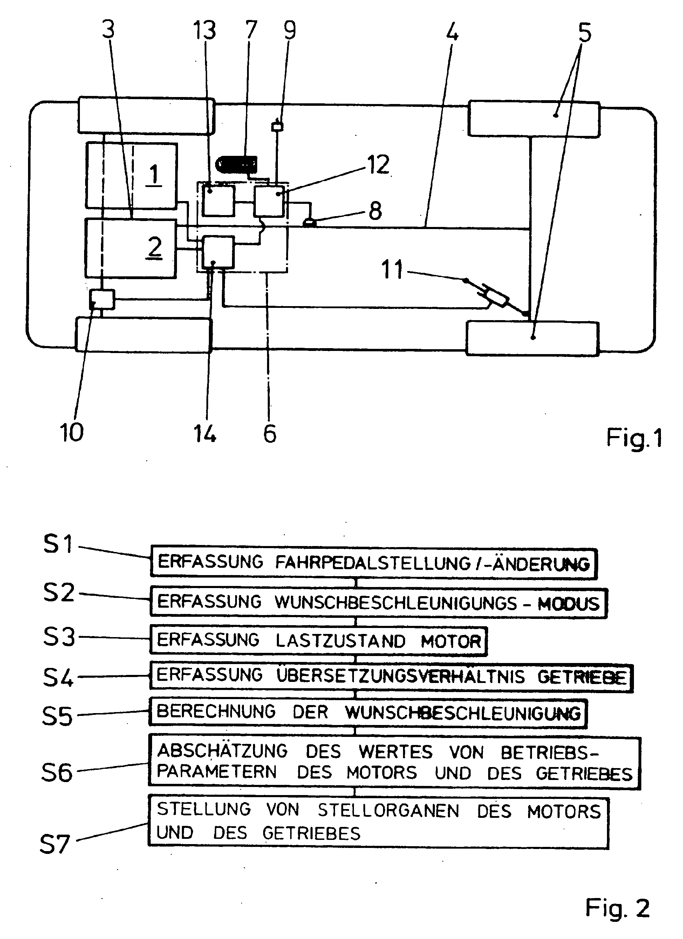

Figur 1 zeigt ein schematisch ein Kraftfahrzeug mit einem Motor 1 und einem Getriebe 2, dessen Übersetzungsverhältnis regelbar ist. Der Motor 1 ist über eine Kurbelwelle 3 mit dem Getriebe 2 verbunden. Das Getriebe 2 treibt über eine Antriebswelle 4 zwei Räder 5 an. Der Motor 1 und das Getriebe 2 sind mit einer Steuerschaltung 6 verbunden. Die Steuerschaltung 6 empfängt die Signale eines Fahrpedals 7 und Signale eines Sensors 8, welcher die Drehzahl der Antriebswelle 4 erfasst. Die Drehzahl der Antriebswelle 4 ist ein Maß für die Geschwindigkeit des Kraftfahrzeuges. Ein mit der Steuerschaltung 6 verbundenes Bedienelement 9 dient zur Auswahl eines Wunschbeschleunigungs-Modus. Weiterhin ist die Steuerschaltung 6 mit einer Lenkhilfe 10 und mit einer Dämpfungseinheit 11 des Fahrwerks des Kraftfahrzeuges verbunden.

Die Steuerschaltung 6 weist eine Recheneinheit 12, einen Speicher 13 für verschiedene Kennlinien und eine Ausgabeeinheit 14 zur Ansteuerung des Motors 1, des Getriebes 2, des Fahrwerks oder der Lenkung auf. Der Recheneinheit 12 werden die Signale des Fahrpedals 7, des Bedienelements 9 und des Sensors 8 zur Erfassung der Drehzahl der Antriebswelle 4 zugeführt. Diese Recheneinheit 12 wählt aus dem mittels des Bedienelements 9 eingestellten Wunschbeschleunigungs-Modus beispielsweise eine Kennlinie oder eine vorgesehene Handlungsabfolge aus dem Speicher 13 aus. Aus dieser Kennlinie oder der Handlungsabfolge sowie der Stellung des Fahrpedals 7 und der momentanen Fahrgeschwindigkeit des Kraftfahrzeuges berechnet die Recheneinheit 12 die aktuelle Wunschbeschleunigung des Fahrers. Weiterhin werden zur Erfassung der Wunschbeschleunigung Motordaten wie beispielsweise die Motordrehzahl und das aktuelle Übersetzungsverhältnis des Getriebes 2 berücksichtigt. Die Recheneinheit 12 steuert schließlich die Ausgabeeinheit 14 an. Die Ausgabeeinheit 14 führt der Wunschbeschleunigung entsprechende Handlungen an dem Motor 1 und/oder dem Getriebe 2 und gegebenenfalls der Lenkung und dem Fahrwerk durch.

Figur 2 zeigt ein Flussdiagramm des Verfahrens zur Einstellung einer Fahrgeschwindigkeit eines Kraftfahrzeuges aus Figur 1. Dabei wird in einem Schritt S1 die Fahrpedalstellung und/oder die Änderung der Fahrpedalstellung und in einem Schritt S2 der über das Bedienelement 9 aus Figur 1 eingestellte Wunschbeschleunigungs-Modus erfasst. Weiterhin werden in einem Schritt S3 der Lastzustand des Motors 1 und im Schritt S4 das eingestellte Übersetzungsverhältnis des Getriebes 2 erfasst. Aus den in den Schritten S1 bis S4 ermittelten Werten wird im Schritt S5 die Wunschbeschleunigung berechnet. Aus der berechneten Wunschbeschleunigung lässt sich anschließend in einem Schritt S6 der einzustellende Wert von Betriebsparametern des Motors 1 und des Getriebes 2 abschätzen. Im letzten Schritt S7 werden Stellorgane des Motors 1, beispielsweise die Drosselklappenstellung, und des Getriebes 2, ein Aktor zum Schalten des Getriebes 2, derart angesteuert, dass die vorgesehene Wunschbeschleunigung erreicht wird.

Die Steuerschaltung 6 ermittelt aus der Stellung des Fahrpedals 7 und gegebenenfalls aus der Veränderungsgeschwindigkeit der Stellung des Fahrpedals 7 sowie aus der Stellung des Bedienelements 9 die vom Fahrer des Kraftfahrzeuges vorgesehene Wunschbeschleunigung. Anschließend wird anhand der vorgesehenen Wunschbeschleunigung der Motor 1 und das Getriebe 2 sowie die Lenkhilfe 10 und die Dämpfungseinheit 11 des Fahrwerks angesteuert. Wenn beispielsweise das Bedienelement 9 auf einen Modus "maximale Beschleunigung" eingestellt ist, wird die Steuerschaltung 6 bei niedergetretenem Fahrpedal 7 den Motor 1 beispielsweise durch Öffnen einer Drosselklappe oder durch Erhöhung der Einspritzmenge an Kraftstoff auf volle Leistung schalten und gegebenenfalls im Getriebe 2 einen Gang herunterschalten. Gleichzeitig kann auch die Lenkung und das Fahrwerk für einen sportlichen Fahrstil angepasst werden. Ist hingegen ein Modus "komfortable Beschleunigung" eingeschaltet, führt ein niedergetretenes Fahrpedal 7 zu einem frühzeitigen Schalten des Getriebes 2 einen Gang herauf und zur Steuerung des Motors 1 in einem mittleren Drehzahlbereich. Gleichzeitig können auch die Lenkung und das Fahrwerk besonders komfortabel eingestellt werden.

### Bezugszeichenliste

- 1: Motor
- 2: Getriebe
- 3: Kurbelwelle
- 4: Antriebswelle
- 5: Rad
- 6: Steuerschaltung
- 7: Fahrpedal
- 8: Sensor
- 9: Bedienelement
- 10: Lenkhilfe
- 11: Dämpfungseinheit
- 12: Recheneinheit
- 13: Speicher
- 14: Ausgabeeinheit

## Patentansprüche

1. Verfahren zur Einstellung einer Fahrgeschwindigkeit eines Kraftfahrzeuges mit einem von einem Motor angetriebenen und regelbaren Getriebe mit den Schritten,
a) Erfassen einer Fahrpedalstellung des Kraftfahrzeuges,
b) Erfassen eines eingestellten Geschwindigkeitswertes einer Fahrgeschwindigkeitsregelung,
c) Erfassen eines manuell eingestellten Wunschbeschleunigungs-Modus der Fahrgeschwindigkeitsregelung,
d) Berechnung einer Wunschbeschleunigung in Abhängigkeit von der Fahrpedalstellung, des eingestellten Geschwindigkeitswertes und des eingestellten Modus der Fahrgeschwindigkeitsregelung,
e) Abschätzen eines zum Erzielen der Wunschbeschleunigung erforderlichen Wertes zumindest eines Betriebsparameters des Motors oder des Getriebes und Einstellen des wenigstens einen berechneten Betriebsparameters am Motor und/oder am Getriebe,
**dadurch gekennzeichnet, dass**
f) vor dem Abschätzen des zum Erzielen der Wunschbeschleunigung erforderlichen Wertes des zumindest einen Betriebsparameters das Übersetzungsverhältnis des Getriebes erfasst und geändert wird.

2. Verfahren nach Anspruch 1, **dadurch gekennzeichnet, dass** der Maximalwert der Auslastung des Motors von dem Wunschbeschleunigungs-Modus begrenzt und vor dem Abschätzen des zum Erzielen der Wunschbeschleunigung erforderlichen Wertes des zumindest einen Betriebsparameters die Auslastung des Motors erfasst wird.

3. Verfahren nach Anspruch 1 oder 2, **dadurch gekennzeichnet, dass** bei der Erfassung der Fahrpedalstellung die Änderungsrate der Fahrpedalstellung erfasst wird.

4. Verfahren nach zumindest einem der vorhergehenden Ansprüche, **dadurch gekennzeichnet, dass** der Wunschbeschleunigungs-Modus anhand der Abfolge von Bedienbefehlen der Fahrgeschwindigkeitregelung erfolgt.

5. Steuersystem mit einer Steuerschaltung für einen Motor (1) und/oder ein Getriebe (2) eines Kraftfahrzeuges zur Durchführung des Verfahrens nach einem der vorhergehenden Ansprüche mit einem Sensor zur Erfassung der Stellung eines Fahrpedals (7), mit einer Recheneinheit (12) zum Berechnen eines Wunschwertes der Beschleunigung des Kraftfahrzeuges, **gekennzeichnet durch** ein manuell betätigbares Bedienelement (9) zur Erfassung eines eingestellten Wunschbeschleunigungs-Modus, wobei das Steuersystem dazu ausgebildet ist, vor dem Abschätzen des zum Erzielen der Wunschbeschleunigung erforderlichen Wertes des zumindest einen Betriebsparameters das Übersetzungsverhältnis des Getriebes zu erfassen und zu ändern.

6. Steuersystem mit einer Steuerschaltung nach Anspruch 5, **dadurch gekennzeichnet, dass** das Bedienelement (9) als Wechselschalter ausgebildet ist.

7. Steuersystem mit einer Steuerschaltung nach Anspruch 5 oder 6, **dadurch gekennzeichnet, dass** das Bedienelement (9) als stufenloses Stellelement ausgebildet ist.

8. Steuersystem mit einer Steuerschaltung nach zumindest einem der Ansprüche 5 bis 7, **dadurch gekennzeichnet, dass** eine Ausgabeeinheit (14) mit einem Aktor des Getriebes (2) verbunden ist.

9. Steuersystem mit einer Steuerschaltung nach zumindest einem der Ansprüche 5 bis 8, **dadurch gekennzeichnet, dass** die Ausgabeeinheit (14) mit Stellelementen des Fahrwerks und/oder der Lenkung verbunden ist.

## Claims

1. Method of adjusting a travelling speed of a motor vehicle having an engine-driven and controllable transmission comprising the steps,
a) detect an accelerator pedal position of the motor vehicle,
b) detect an adjusted speed value of a cruise control system,
c) detect a manually adjusted requested-acceleration mode of the cruise control system,
d) calculate a requested acceleration in dependence upon the accelerator pedal position, the adjusted speed value and the adjusted mode of the cruise control system,
e) estimate a value of at least one operating parameter of the engine or transmission that is needed to achieve the requested acceleration and adjust the at least one calculated operating parameter at the engine and/or transmission,
**characterized in that**
f) prior to estimating the value of the at least one operating parameter needed to achieve the requested acceleration the gear ratio of the transmission is detected and changed.

2. Method according to claim 1, **characterized in that** the maximum value of the load on the engine is limited by the requested-acceleration mode and, prior to estimating the value of the at least one operating parameter needed to achieve the requested acceleration, the load on the engine is detected.

3. Method according to claim 1 or 2, **characterized in that** during the detection of the accelerator pedal position the rate of change of the accelerator pedal position is detected.

4. Method according to at least one of the preceding claims, **characterized in that** the requested-acceleration mode ensues from the sequence of control commands of the cruise control system.

5. Control system with a control circuit for an engine (1) and/or a transmission (2) of a motor vehicle for implementing the method according to one of the preceding claims having a sensor for detecting the position of an accelerator pedal (7), having an arithmetic unit (12) for calculating a requested value of the acceleration of the motor vehicle, **characterized by** a manually actuable operating element (9) for detecting an adjusted requested-acceleration mode, wherein the control system is configured such that, prior to estimating the value of the at least one operating parameter needed to achieve the requested acceleration, it detects and changes the gear ratio of the transmission.

6. Control system with a control circuit according to claim 5, **characterized in that** the operating element (9) takes the form of a changeover switch.

7. Control system with a control circuit according to claim 5 or 6, **characterized in that** the operating element (9) takes the form of a stepless control element.

8. Control system with a control circuit according to at least one of claims 5 to 7, **characterized in that** an output unit (14) is connected to an actuator of the transmission (2).

9. Control system with a control circuit according to at least one of claims 5 to 8, **characterized in that** the output unit (14) is connected to control elements of the suspension and/or the steering system.

## Revendications

1. Procédé de réglage d'un véhicule automobile équipé d'une transmission entraînée par un moteur et réglable, comprenant les étapes consistant à :
a) Détecter une position de la pédale d'accélérateur du véhicule automobile,
b) Détecter une valeur de vitesse réglée d'une régulation de vitesse de roulage,
c) Détecter un mode d'accélération souhaité, réglé manuellement, de la vitesse de régulation du véhicule,
d) Calculer une accélération souhaitée en fonction de la position de pédale d'accélérateur, de la valeur de vitesse réglée et du mode réglé de la régulation de vitesse de roulage,
e) Estimer une valeur, nécessaire pour atteindre l'accélération souhaitée, au moins d'un paramètre de fonctionnement du moteur ou de la transmission, et régler le au moins un paramètre de fonctionnement calculé sur le moteur et/ou sur la transmission,
**caractérisé en ce que**,
f) avant l'estimation de la valeur nécessaire pour atteindre l'accélération souhaitée du au moins un paramètre de fonctionnement, le rapport de démultiplication de la transmission est détecté et modifié.

2. Procédé selon la revendication 1, **caractérisé en ce que** la valeur maximale d'utilisation du moteur est limitée par le mode d'accélération souhaitée et, avant d'effectuer l'estimation de la valeur nécessaire pour atteindre l'accélération souhaitée du au moins un paramètre de fonctionnement, l'utilisation du moteur est détectée.

3. Procédé selon la revendication 1 ou 2, **caractérisé en ce que**, lors de la détection de la position de pédale d'accélérateur, le taux de modification de la position et de l'accélérateur est détecté.

4. Procédé selon au moins l'une des revendications précédentes, **caractérisé en ce que** le mode d'accélération souhaitée est effectué à l'aide de la succession d'ordres d'utilisation de la régulation de vitesse de roulage.

5. Système de commande, comprenant un circuit de commande pour un moteur (1) et/ou une transmission (2) d'un véhicule automobile, pour mise en oeuvre du procédé selon l'une des revendications précédentes, avec un capteur pour détecter la position d'une pédale d'accélérateur (7), avec une unité de calcul (12) pour calculer une valeur souhaitée de l'accélération du véhicule automobile, **caractérisé par** un élément de manoeuvre (9) actionnable manuellement, pour détecter un mode d'accélération souhaitée réglé, sachant que le système de commande est réalisé pour détecter et modifier le rapport de démultiplication de la transmission, avant d'effectuer l'estimation de la valeur nécessaire à l'atteinte de l'accélération souhaitée du au moins un paramètre de fonctionnement.

6. Système de commande, comprenant un circuit de commande selon la revendication 5, **caractérisé en ce que** l'élément de manoeuvre (9) est réalisé sous la forme d'interrupteur à deux positions.

7. Système de commande, comprenant un circuit de commande selon la revendication 5 ou 6, **caractérisé en ce que** l'élément de manoeuvre (9) est réalisé sous la forme d'élément de réglage à caractéristique progressive continue.

8. Système de commande, comprenant un circuit de commande selon au moins l'une des revendications 5 à 7, **caractérisé en ce qu'**une unité de sortie (14) est reliée à un acteur de la transmission (2).

9. Système de commande, comprenant un circuit de commande selon au moins l'une des revendications 5 à 8, **caractérisé en ce que** l'unité de sortie (14) est réglée à des éléments de réglage du train de roulement et/ou de la direction.
